# EUROPEAN PATENT APPLICATION

(11) **EP 3 051 907 A1**
(43) Date of publication of application: **03.08.2016**
(21) Application number: 14849012.1
(22) Date of filing: 19.09.2014
(51) Int. Cl.: H04W 72/04, H04W 16/32, H04W 48/16

(54) **SMALL BASE STATION, USER TERMINAL, AND WIRELESS COMMUNICATION METHOD**

(30) Priority: 26.09.2013 JP 2013200564
(71) Applicant: NTT DOCOMO, INC., Chiyoda-ku Tokyo 100-6150 (JP)
(72) Inventor: TAKEDA, Kazuaki, Tokyo 100-6150 (JP); HARADA, Hiroki, Tokyo 100-6150 (JP); NAGATA, Satoshi, Tokyo 100-6150 (JP); ISHII, Hiroyuki, Palo Alto, California 94304 (US)
(74) Representative: Hoffmann Eitle
(86) International application number: PCT/JP2014/074894
(87) International publication number: WO 2015/046071

(57) **Abstract**

The present invention is designed so that a small cell detection/measurement signal is introduced without making an impact on existing systems. Where a small cell (S) covered by a small base station (10) is placed within a macro cell (M) covered by a macro base station (20) and a user terminal (30) is present within the small cell, the small base station generates a detection/measurement signal for a new detection process, which is different from an existing small cell detection process using synchronization signals, and maps the detection/measurement signal to avoid the synchronization signals and transmits the detection/measurement signal to the user terminal, and the user terminal receives the detection/measurement signal from the small base station and detects the small cell.

## Description

### Technical Field

The present invention relates to a small base station, a user terminal and a radio communication method in a next-generation mobile communication system.

### Background Art

Conventionally, various radio access schemes are used in radio communication systems. For example, in UMTS (Universal Mobile Telecommunication System), which is also referred to as "W-CDMA (Wideband Code Division Multiple Access)," code division multiple access (CDMA) is used. Also, in LTE (Long Term Evolution), orthogonal frequency division multiple access (OFDMA) is used (see, for example, non-patent literature 1).

Also, successor systems of LTE (referred to as, for example, "LTE-advanced" or "LTE enhancement" (hereinafter referred to as "LTE-A")) are under study for the purpose of achieving further broadbandization and increased speed beyond LTE. In the LTE-A system, a HetNet (Heterogeneous Network), in which small cells having local coverage areas of a radius of approximately several tens of meters are formed within a macro cell having a wide coverage area of a radius of approximately several kilometers, is under study.

### Citation List

### Non-Patent Literature

Non-Patent Literature 1: 3GPP TR 25.913 "Requirements for Evolved UTRA and Evolved UTRAN"

### Summary of Invention

### Technical Problem

In the HetNet (Rel-12), introduction of a new mechanism for small cell detection ("small cell discovery") is under study. In small cell discovery, a new detection/measurement signal, which is different from existing synchronization signals and measurement signals, is used. In the small cells, various types of signals for existing user terminals are also transmitted, so that compatibility with existing systems is maintained. Consequently, there is a threat that the detection/measurement signal that is introduced anew in the small cells might have a negative impact on existing systems.

The present invention has been made in view of the above, and it is therefore an object of the present invention to provide a small base station, a user terminal and a radio communication method to allow introduction of a small cell detection/measurement signal without making an impact on existing systems.

### Solution to Problem

The small base station of the present invention provides a small base station that covers a small cell, the small cell being placed within a macro cell that is covered by a macro base station, and this small base station has a signal generating section that generates a detection/measurement signal for a second detection process, which is different from a first detection process of the small cell using a synchronization signal, a mapping section that maps the detection/measurement signal to avoid the synchronization signal, and a transmission section that transmits the detection/measurement signal to a user terminal within the small cell.

### Advantageous Effects of Invention

According to the present invention, it is possible to allow a user terminal to detect small cells in a first detection process and also detect small cells in a second detection process. At this time, the detection/measurement signals are mapped to avoid the synchronization signals, so that the first detection process to use the synchronization signals and the second detection process to use the detection/measurement signals do not interfere with each other. Consequently, it is possible to introduce the second detection process without making a negative impact on systems that employ the first detection process.

### Brief Description of Drawings

FIG. 1 is a conceptual diagram of a HetNet;
FIG. 2 is a diagram to explain small cell discovery;
FIG. 3 provides diagrams to explain a DS mapping method;
FIG. 4 is a diagram to show a TDD UL/DL configuration;
FIG. 5 is a diagram to explain the communication process by user terminals in RRC-connected mode and idle mode;
FIG. 6 is a diagram to show a schematic structure of a radio communication system;
FIG. 7 is a diagram to show an overall structure of a small base station;
FIG. 8 is a diagram to show a principle functional structure of a baseband signal processing section in a small base station;
FIG. 9 is a diagram to show an overall structure of a user terminal; and
FIG. 10 is a diagram to show a principle functional structure of a baseband signal processing section in a user terminal.

### Description of Embodiments

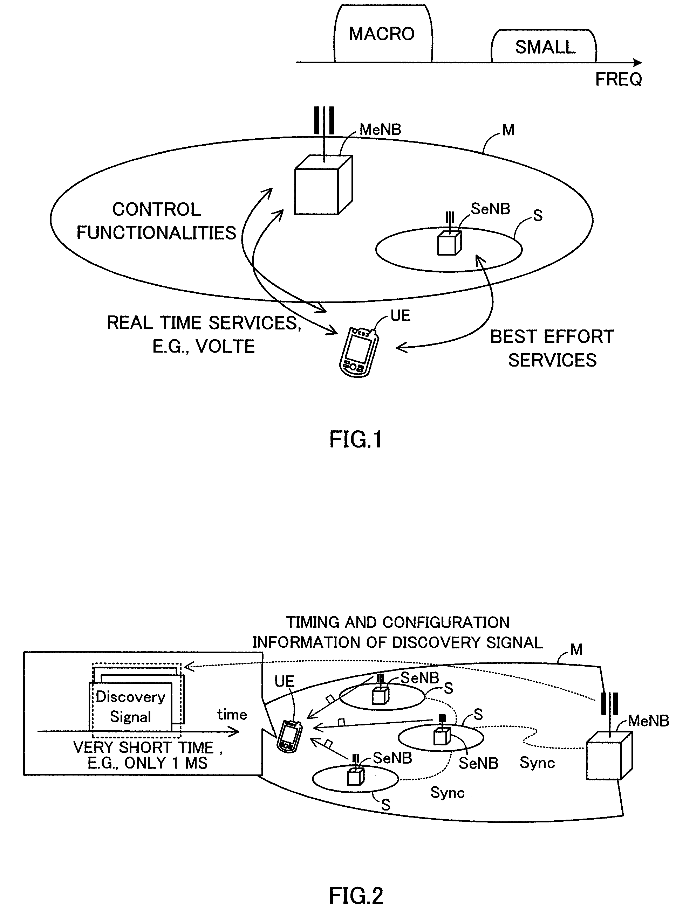

FIG. 1 is a conceptual diagram of a HetNet. As shown in FIG. 1, a HetNet refers to a radio communication system, in which a macro cell M and small cells S are placed to overlap each other geographically at least in part. A HetNet is comprised of a radio base station MeNB that forms a macro cell M (hereinafter referred to as the "macro base station"), a radio base station SeNB that forms a small cell S (hereinafter referred to as the "small base station"), and a user terminal UE that communicates with the macro base station MeNB and the small base station SeNB. Note that a "small cell S" is a concept to cover a phantom cell, a pico cells, a nano cell, a femto cell, a micro cell and so on.

In the HetNet structure, SCE (Small Cell Enhancement) to execute high-density deployment of small cells is under study, in order to support the continuing growth of traffic. In SCE, a carrier of a relatively low frequency band is used in the macro cell M, and a carrier of a relatively high frequency band is used in the small cell S. Consequently, while a wide coverage and mobility are secured in the macro cell M by supporting high transmission power density in the low frequency band, in the small cell S, throughput is increased by securing capacity with the high frequency band.

Generally, in cell detection by a user terminal UE, after synchronization is captured by using the PSS (Primary Synchronization Signal) and the SSS (Secondary Synchronization Signal), which are synchronization signals, the received quality of small cells S is measured by using CRSs (Cell-specific Reference Signals) (first detection process). In the above-noted SCE scenario, a new mechanism for small cell detection is under study for introduction (second detection process, or "small cell discovery"). In small cell discovery, small cells are detected and measured by using detection/measurement signals referred to as "DSs (Discovery Signals)," instead of the existing (Rel-11 or earlier) PSS, SSS and CRSs.

As shown in FIG. 2, in small cell discovery, DSs are transmitted synchronously between a plurality of small cells. At this time, the DS are orthogonalized between the small cells, and the DSs are transmitted in a long cycle so as not to increase the overhead. Also, assist information for the DS detection process is reported to the user terminal UE connected with the macro cell M or with the small cells S. The assist information includes the state of synchronization between the small cells S and the macro cell M, a small cell ID list, the DS transmission frequency, the transmission timings, the cycle, the transmission power, the number of antenna ports, the signal configuration and so on. In this way, the transmission timings and parameters of the DSs are configured as appropriate on the base station side.

The user terminal UE monitors the radio signals at the arrival timings of the DSs based on the assist information reported from the base station side, thereby detecting and measuring the DSs efficiently. Consequently, even when the DSs are transmitted in a long cycle, the user terminal does not have to keep monitoring, so that its power consumption is reduced. Furthermore, since the DSs are orthogonalized between a plurality of small cells, the interference is mitigated and the accuracy of measurements is improved.

Small cells of Rel-12 and later versions are basically required to be compatible with existing systems, and, in the small cells, the PSS, SSS and CRSs for cell detection are transmitted to existing user terminals UE (Rel-11 and earlier versions) as heretofore. Also, it is assumed that existing signals such as CSI-RSs are also transmitted as heretofore. However, to introduce small cell discovery, the relationship between DSs and existing signals are not has not been studied sufficiently.

So, the present inventors have arrived at the present invention in order to reduce the impact of small cell discovery upon existing systems. That is, a gist of the present invention is to stipulate the DS resource mapping configuration and subframe-related configuration patterns, so that user terminals UE can identify existing signals and DSs properly.

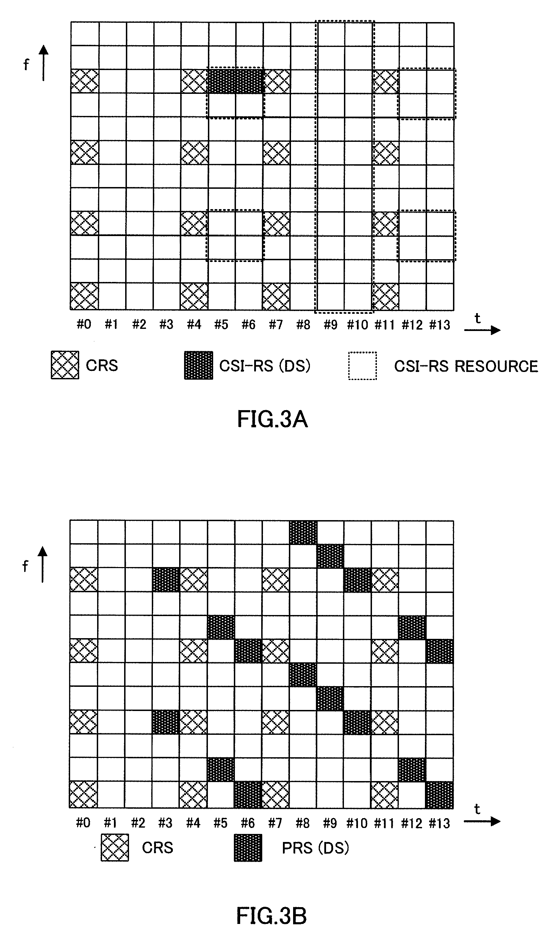

Here, the mapping method of DSs will be described. FIG. 3 is a diagram to explain a DS mapping method. Note that the mapping method shown in FIG. 3 is simply an example, and this method is by no means limiting. FIG. 3A shows a CSI-RS mapping configuration, and FIG. 3B shows a PRS (Positioning Reference Signal) mapping configuration.

As shown in FIG. 3A, in a first signal configuration of DS, a CSI-RS mapping configuration is employed. One resource block that is stipulated in LTE is formed with 12 subcarriers that are consecutive in the frequency direction, and 14 symbols that are consecutive in the time axis direction. In this resource block, 40 resource elements are reserved for CSI-RSs. The CSI-RS resources are configured not overlap other reference signals such as CRSs and DM-RSs (Demodulation-Reference Signals). From the perspective of reducing the PAPR, the CSI-RS resources are allocated in sets of two resource elements that neighbor each other in the time axis direction.

Also, CSI-RSs are mapped to varying resource elements between a plurality of cells, so that interference between a plurality of cells is reduced. For example, when the number of CSI-RS ports is two, CSI-RSs are mapped to two resource elements among 40 resource elements, so that maximum 20 orthogonal patterns can be configured.

In the first DS signal configuration, the DS mapping configuration is stipulated in accordance with this CSI-RS mapping configuration. That is, with DSs, too, 40 resource elements are reserved for DSs in one resource block, and DSs are mapped to two resource elements that neighbor each other in the time axis direction. Also, DSs are mapped to varying resources between a plurality of small cells, in accordance with the above-noted orthogonal patterns. Although, in this first signal configuration, the accuracy of measurements decreases accompanying the low density of DSs, it is nevertheless possible to reduce the inter-cell interference by increasing the number of orthogonality conditions.

Furthermore, the first DS signal configuration is stipulated so that DSs are not mapped to resources where the PSS and the SSS, which are synchronization signals, are present. In this case, the first DS signal configuration may also be stipulated not to map DSs to resources where the PBCH is present. Furthermore, in the configuration in which part of the DSs collide with CRSs (or part of the antenna ports), the first DS signal configuration may be also stipulated not to map DSs to resources where CRSs are present. In this way, in a DS signal configuration using a CSI-RS mapping configuration, DSs are mapped at least to avoid resources where the synchronization signals are present. By this means, simultaneous transmission with the existing PSS, SSS and so on becomes possible.

As shown in FIG. 3B, in a second DS signal configuration, a PRS mapping configuration is employed. In one resource block that is stipulated in LTE, PRSs are mapped to be distributed in the frequency direction and in the time axis direction. The PRS resources are configured not to overlap the top three symbols, which are for the PDCCH, and each symbol for CRSs. In each symbol, avoiding the PDCCH and CRSs, the PRS resources are configured in two resource elements that are six subcarriers apart.

Also, the PRSs are shifted in the frequency direction on a per cell basis, so that the interference between a plurality of cells is reduced. In this case, PRSs are mapped at six subcarrier-intervals, so that maximum six orthogonal patterns can be configured.

In the second DS signal configuration, the DS mapping configuration is stipulated is accordance with this PRS mapping configuration. That is, in each symbol, avoiding the PDCCH and CRSs, DSs are mapped to two resource elements that are six subcarriers apart. Also, DSs are mapped to varying resources between a plurality of small cells in accordance with the above-noted orthogonal patterns. In this second signal configuration, inter-cell interference increases because it is not possible to prepare many orthogonal patterns, but it is nevertheless possible to achieve good accuracy of measurements by virtue of the high density.

Furthermore, the second DS signal configuration is also configured so that DSs are not mapped to resources where the PSS and the SSS, which are synchronization signals, are present. In this case, the second DS signal configuration may also be stipulated not to map DSs to resources where the PBCH is present. Furthermore, in the configuration in which part of the DSs collide with CRSs (or part of the antenna ports), the second DS signal configuration may be also stipulated not to map DSs to resources where CRSs are present. In this way, in a DS signal configuration using a PRS mapping configuration, DSs are mapped at least to avoid resources where the synchronization signals are present. By this means, simultaneous transmission with the existing PSS, SSS and so on becomes possible.

Also, the first and second DS signal configurations may be stipulated not to map the PDSCH (Physical Downlink Shared Channel) and CSI-RSs to DS resources. That is, stipulation is made not to use DS resource elements for PDSCH transmission and CSI-RS transmission. DSs are transmitted in a longer cycle than CSI-RSs, so that prioritizing DSs-over CSI-RSs makes a minor impact. Also, if stipulation is provided not to transmit the PDSCH in DS resources, it is possible to allow a user terminal to execute rate matching of the PDSCH properly.

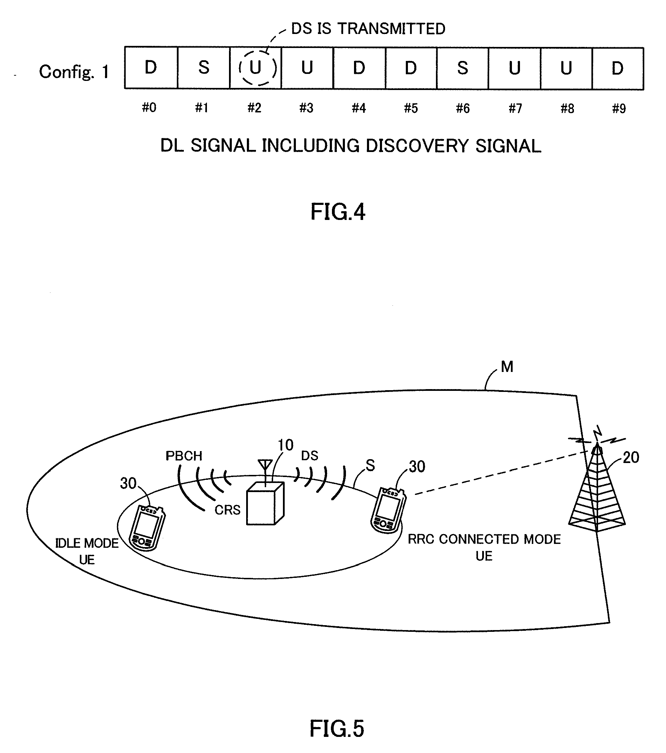

Also, there may be cases where small cells operate in TDD (Time Division Duplex). Such small cells may be configured to transmit DSs in UL subframes on the uplink. FIG. 4 is a diagram to show a TDD UL/DL configuration. Although a UL/DL configuration 1 will be described as an example here, it is equally possible to transmit DSs in UL subframes of other UL/DL configurations (UL/DL configurations 0 and 2 to 6). As shown in FIG. 4, in UL/DL configuration 1, subframes #0, #4, #5 and #9 are configured as DL subframes, subframes #2, #3, #7 and #8 are configured as UL subframes, and subframes #1 and #6 are configured as special subframes.

In the UL subframes, a user terminal does not transmit the PUSCH (Physical Uplink Shared Channel) in the absence of a UL grant. Also, on the small base station side, it is possible not to allocate CQIs (Channel Quality Indicators), ACKs/NACKs (Acknowledgements/Negative Acknowledgements) and so on. In this way, on the base station side, DS resources can be reserved in UL subframes (for example, subframe #2), so that it is possible to transmit DSs using UL subframes. By this means, it is possible to prevent collisions with the PBCH and so on that are transmitted in DL subframes, and reserve the subframes for DS transmission.

Also, cases might occur in which the PUCCH (Physical Uplink Control Channel) alone is transmitted in UL subframes. In this case, since the PUCCH is transmitted at both ends of the band, the DSs may be mapped to the center of the band by avoiding the PUCCH resources. Similarly, when it is desirable to transmit the SRS (Sounding Reference Signal), it is also possible to avoid the SRS resources and map DSs. In this way, when a small base station can perform the downlink signal transmission process and the uplink signal receiving process at the same time, the small base station does not map the detection/measurement signal to the PUCCH (control signal) and/or SRS (reference signal) resources in UL subframes.

When DSs are transmitted in UL subframe, assist information for receiving the DSs is transmitted from the macro base station or a small base station to a user terminal (RRC-connected mode) via a higher layer. In FIG. 4, a report to the effect that the DS is transmitted in subframe #2, which is an UL subframe, is sent from the macro base station or a small base station, to a user terminal. By this means, the user terminal can properly identify the DS transmitted in that subframe and execute the measurement process of the DS, without processing the DS received in the UL subframe as mis-configuration.

In this case, the user terminal may detect the UL subframe in which the DS is transmitted, assuming that at least one non-DS DL signal such as the CSI-RS, the CRS, the PDCCH, the PDSCH and so on is transmitted. On the other hand, when higher layer signaling is reported, the user terminal does not transmit UL signals such as the PRACH (Physical Random Access Channel), the PUCCH, the PUSCH, the SRS and so on.

In this way, by transmitting DSs in UL subframes, it is possible to introduce small cell discovery as a new detection process, without making an impact on the existing small cell detection process. That is, it is possible to execute the existing small cell detection process in DL subframes and execute small cell discovery in part of the UL subframes.

Now, conventional small cells that transmit DSs only support user terminals in RRC-connected mode that can identify DS transmission timings and so on. That is, user terminals that became in RRC-connected mode by virtue of macro-assist receive DSs from the small cells and use the small cells as SCells in carrier aggregation. In the future, such small cells may also support user terminals in idle mode, before entering RRC-connected mode, and allow these uer terminals to detect small cells on a stand-alone basis.

However, since DSs are transmitted in a long cycle, it is difficult to use DSs in cell selection/cell re-selection in idle-mode on an as-is basis, from the perspective of user terminal power consumption. Consequently, user terminals in idle mode need to perform cell selection/cell re-selection as heretofore, and the small cells need to transmit DSs not to make an impact on cell selection/cell re-selection. So, with the present embodiment, it is preferable to transmit DSs in subframes or resources that are different from those of existing DL RSs (Downlink Reference Signals), system information and so on.

Now, the stand-alone operation in small cells will be described below. FIG. 5 is a diagram to explain the communication process in user terminal in RRC-connected mode and idle mode. Referring to FIG. 5, in the small cell S, user terminal 30 in idle mode and a user terminal 30 in RRC-connected mode are present. Also, the DS, the CRS, the PBCH and so on are transmitted from the small base station 10 to the whole of the small cell S. In this case, the user terminal 30 in RRC-connected mode can identify the DS and the CRS, but the user terminal 30 in idle mode cannot identify the DS and the CRS.

In order to identify the DS, the CRS and so on, the user terminal 30 in idle mode needs to receive the PBCH and establish RRC connection. Consequently, the small base station 10 does not map the DS for the user terminal 30 in RRC-connected mode to resource for the PBCH for the user terminal 30 in idle mode. By this means, the user terminal 30 in idle mode is not prevented from receiving the PBCH due to the transmission of the DS. Then, the user terminal 30 acquires system information (MIB: Master Information Block) and SIB: System Information Block) from the PBCH and establishes RRC connection, and, after entering RRC-connected mode, receives the DS, the CRS and so on from the small base station 10.

In this way, the small base station 10 transmits the DS to avoid the PBCH, so that it is possible to allow the user terminal 30 in idle mode to detect the small cell S on a stand-alone basis, without making the user terminals 30 in idle mode read the PBCH of the macro cell M. The user terminals 30 may understand that DSs are not transmitted in subframes in which the PBCH is transmitted. By this means, it is possible to prevent the small base station 10 from transmitting DSs to the user terminals 30 in the same subframes with the PBCH, and allow the user terminal 30 in idle mode to receive the PBCH.

To the user terminal 30 in idle mode, a paging signal, which is used to call from idle mode, is transmitted from the small base station 10. As for this paging signal for the user terminal 30 in idle mode, too, the user terminals 30 may be configured to recognize that DSs are not transmitted in subframes in which the paging signal is transmitted. By this means, it is possible to prevent the small base station 10 from transmitting DSs to the user terminals 30 in the same subframes with the paging signal, and allow the user terminal 30 in idle mode to receive the paging signal.

Also, as mentioned earlier, by transmitting DSs in UL subframes when the small cell S operates in TDD, it is possible to allow the user terminal 30 in idle mode to detect the small cell S on a stand-alone basis. Note that although a configuration has been described here where the DS is used in the user terminal 30 in RRC-connected mode, this configuration is by no means limiting. As a long as a configuration is employed in which the DS is used in small cell discovery, the DS may be used in the user terminal 30 in idle mode as well. That is, the DS can be used in cell selection/cell re-selection in the user terminal 30 in idle mode.

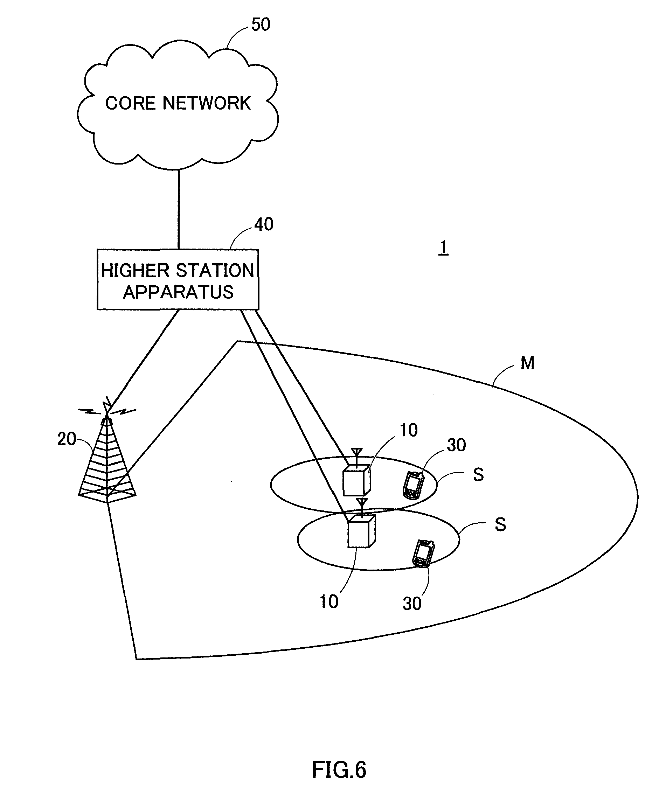

The radio communication system of the present embodiment will be described in detail below. FIG. 6 is a diagram to show a schematic structure of a radio communication system according to the present embodiment. Note that the radio communication system shown in FIG. 6 is a system to incorporate, for example, the LTE system or SUPER 3G. This radio communication system can adopt carrier aggregation (CA) to group a plurality of fundamental frequency blocks (component carriers) into one, where the system bandwidth of the LTE system constitutes one unit. Also, this radio communication system may be referred to as "IMT-advanced," or may be referred to as "4G," "FRA (Future Radio Access)," etc.

The radio communication system 1 shown in FIG. 6 includes a macro base station 20 that forms a macro cell M, and small base stations 10 that form small cells S, which are placed within the macro cell M and narrower than the macro cell M. Also, user terminals 30 are placed in the macro cell M and in each small cell S. The user terminals 30 can connect with both the macro base station 20 and the small base stations 10. In the macro cell M and the small cells S, not only user terminals 30 that are communicating with the base stations, but also user terminals 30 in RRC-connected mode and idle mode may be included as well.

In the macro cell M, a carrier of a relatively low frequency band (for example, 2 GHz) and a narrow bandwidth (referred to as "legacy carrier" and so on) is used. On the other hand, in the small cells S, a carrier of a relatively high frequency band (for example, 3.5 GHz and so on) and a wide bandwidth is used. Also, carries of the same frequency may be used in the macro cell M and the small cells S. The macro base station 20 and the small base stations 10 may be connected via cable (optical fiber, X2 interface, etc.) or via radio, or the macro base station 20 and the small base stations 10 may not be connected.

The macro base station 20 and the small base stations 10 are each connected with a higher station apparatus 40, and are connected with a core network 50 via the higher station apparatus 40. Note that the higher station apparatus 40 may be, for example, an access gateway apparatus, a radio network controller (RNC), a mobility management entity (MME) and so on, but is by no means limited to these. Also, each small base station 10 may be connected with the higher station apparatus 40 via the macro base station 20.

Note that the macro base station 20 is a radio base station having a relatively wide coverage, and may be referred to as an "eNodeB," a "transmitting/receiving point," and so on. The small base stations 10 are radio base stations that have local coverages, and may be referred to as "pico base stations," "femto base stations," "home eNodeBs," "RRHs (Remote Radio Heads)," "micro base stations," "transmitting/receiving points" and so on. Each user terminal 30 is a terminal to support various communication schemes such as LTE and LTE-A, and may be either a mobile communication terminal or a stationary communication terminal.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system band into bands formed with one or continuous resource blocks, per terminal, and allowing a plurality of terminals to use mutually different bands.

Now, communication channels used in the radio communication system shown in FIG. 6 will be described. Downlink communication channels include a PDSCH (Physical Downlink Shared CHannel), which is used by each user terminal 30 on a shared basis, and downlink L1/L2 control channels (PDCCH, PCFICH, PHICH and EPDCCH). User data and higher layer information are communicated by the PDSCH. Scheduling information for the PDSCH and the PUSCH and so on are communicated by the PDCCH (Physical Downlink Control CHannel). The number of OFDM symbols to use for the PDCCH is communicated by the PCFICH (Physical Control Format Indicator CHannel). HARQ ACKs and NACKs for the PUSCH are communicated by the PHICH (Physical Hybrid-ARQ Indicator CHannel). Also, scheduling information for the PDSCH and the PUSCH and so on may be communicated by the EPDCCH (Enhanced Physical Downlink Control CHannel). This EPDCCH is frequency-division-multiplexed with the PDSCH (downlink shared data channel).

Uplink communication channels include a PUSCH (Physical Uplink Shared Channel), which is used by each user terminal 30 on a shared basis as an uplink data channel, and a PUCCH (Physical Uplink Control Channel), which is an uplink control channel. User data and higher layer information are communicated by this PUSCH. Also, by means of the PUCCH, downlink radio quality information (CQI: Channel Quality Indicator), ACKs/NACKs and so on are communicated.

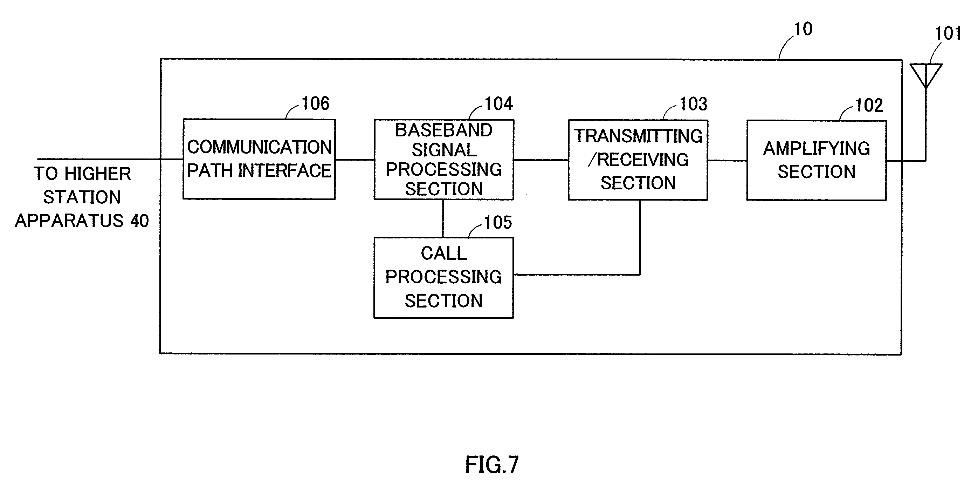

FIG. 7 is a diagram to show an overall structure of a small base station 10 according to the present embodiment. The small base station 10 has a transmitting/receiving antenna 101, an amplifying section 102, a transmitting/receiving section (transmission section) 103, a baseband signal processing section 104, a call processing section 105 and a communication path interface 106.

A data signal to be transmitted from the small base station 10 to a user terminal 30 on the downlink is input from the higher station apparatus 40, into the baseband signal processing section 104, via the communication path interface 106.

In the baseband signal processing section 104, the data signal is subjected to a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, a precoding process and so on, and the result is forwarded to the transmitting/receiving section 103. Furthermore, control signals are also subjected to transmission processes such as channel coding and an inverse fast Fourier transform, and forwarded to the transmitting/receiving section 103.

The baseband signal that is output from the baseband signal processing section 104 is converted into a radio frequency band in the transmitting/receiving section 103. The amplifying section 102 amplifies the radio frequency signal having been subjected to frequency conversion, and transmits the signal through the transmitting/receiving antenna 101.

On the other hand, as for data that is transmitted from the user terminal 30 to the small base station 10 on the uplink, a radio frequency signal that is received in the transmitting/receiving antenna 101 is amplified in the amplifying section 102, converted into the baseband signal through frequency conversion in the transmitting/receiving section 103, and input into the baseband signal processing section 104.

In the baseband signal processing section 104, the input baseband signal is subjected to an FFT process, an IDFT process, error correction decoding, a MAC retransmission control receiving process, and RLC layer and PDCP layer receiving processes, and the result is forwarded to the higher station apparatus 40 via the communication path interface 106. The call processing section 105 performs call processing such as setting up and releasing communication channels, manages the state of the base station and manages the radio resources.

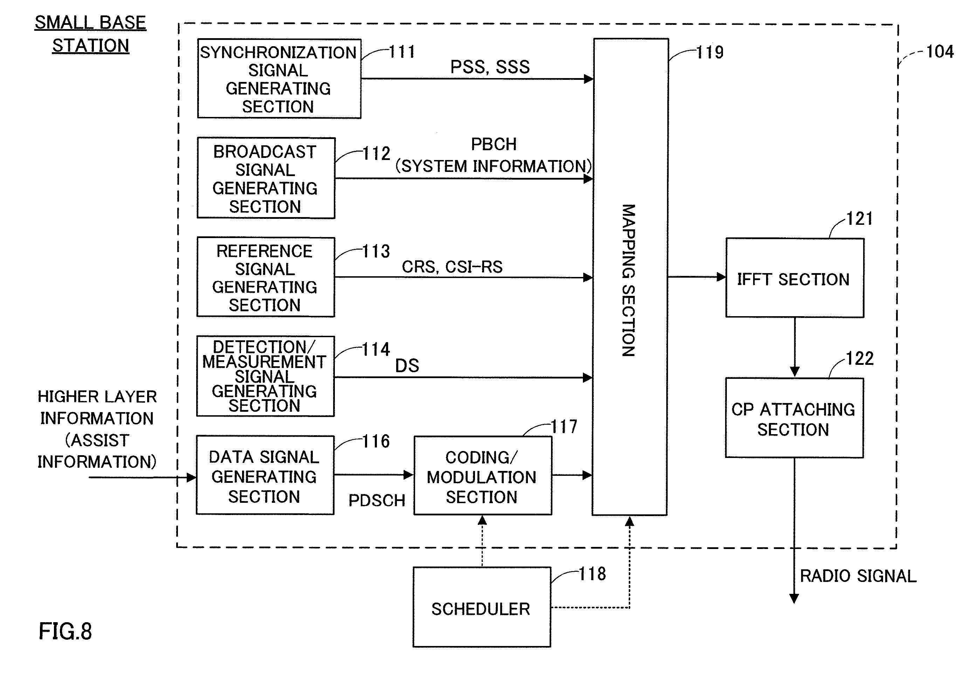

FIG. 8 is a diagram to show a principle functional structure of the baseband signal processing section 104 provided in the small base station 10 according to the present embodiment. As shown in FIG. 8, the baseband signal processing section 104 has a synchronization signal generating section 111, a broadcast signal generating section 112, a reference signal generating section 113, a detection/measurement signal generating section (signal generating section) 114, a data signal generating section 116, a coding/modulation section 117, a mapping section 119, an IFFT section 121 and a CP attaching section 122. Also, the baseband signal processing section 104 is controlled by the scheduler 118. Although only part of the structure of the baseband signal processing section 104 is shown here, assume that a structure to meet the needs, without shortage, is provided.

The synchronization signal generating section 111 generates the PSS and the SSS, which are synchronization signals. The PSS is used to detect symbol timing synchronization and detect the local identifier of the small cell S. The SSS is used to detect radio frame synchronization and detect the group identifier of the small cell S. These PSS and SSS are used in the initial state of cell search in existing small cell detection. By means of the PSS and SSS, the small cell's physical cell ID (PCI: Physical Cell Identifier) can be acquired.

The broadcast signal generating section 112 generates the PBCH, which is a broadcast signal. The PBCH includes the MIB and SIB, which are supposed to be read first after cell search. The MIB includes fundamental information such as the system bandwidth, the system frame number and so on. The SIB includes various types of system information. The system information includes the subframe configuration (UL/DL configuration) for when the small cell S operates in TDD. The PBCH is transmitted for the user terminal 30 in idle mode to allow the user terminal 30 to transition to RRC-connected mode with the PBCH.

The reference signal generating section 113 generates various kinds of reference signals such as the CRS, the CSI-RS and so on. The CRS is used in channel quality measurement, cell search mobility measurement and so on, in addition to the demodulation of transmission data. The CSI-RS is used only in channel quality measurement.

The detection/measurement signal generating section 114 generates the DS, which is a detection/measurement signal. Unlike the existing detection process to use the PSS, the SSS and the CRS, the DS is used in small cell discovery, which is a newly introduced detection process. The DS is transmitted in a long cycle, and, unlike the PSS and the SSS, not used in cell search. Consequently, the DS is transmitted for the user terminal 30 in RRC-connected mode to allow the user terminal 30 to detect and measure small cell S by means of the DS. Note that it is equally possible to employ a configuration to enable the user terminal 30 in idle mode to receive the DS and detect and measure the small cell S.

The data signal generating section 116 generates the PDSCH, which is a data signal for the user terminal 30. The PDSCH includes higher layer information such as assist information for receiving the DS. The assist information includes the state of synchronization between the macro cell M and the small cell S, the ID list of small cells S, the DS transmission frequency, the transmission timing, the cycle, the transmission power, the number of antenna ports, the signal configuration and so on. Also, when the small cell S operates in TDD (see FIG. 4), the assist information includes an indication that the DS is transmitted in UL subframes, and the subframe numbers in which the DS is transmitted, etc.

The coding/modulation section 117 encodes and modulates the PDSCH input from the data signal generating section 116. The coding rate and modulation scheme are determined by the scheduler 118, based on feedback information from the user terminal 30.

The scheduler 118 schedules reference signals such as the CSI-RS and the CRS, the DS, and the PDSCH. The scheduler 118 allocates radio resources based on command information from the higher station apparatus 40 and feedback information from each user terminal 30 (for example, CSI including CQIs, RIs, etc.). At this time, the scheduler 118 does not allocate the DS to resources where synchronization signals such as the PSS and the SSS are present. Also, the scheduler 118 may also operate not to allocate the DS to resources where the PBCH and/or the CRS is present. or not to allocate the PDSCH and/or the CSI-RS to DS resources.

When the small cell S operates in TDD, the scheduler 118 may allocate DSs to UL subframes. In this case, the scheduler 118 executes control so that the PUSCH is not transmitted by using a UL grant, and ACKs/NACKs and CQIs are not allocated to the UL subframes. Also, the scheduler 118 executes control so that DSs are not allocated to PUCCH resources and SRS resources. Note that it is also possible to allow the user terminal 30 to conduct detection and measurements, not only in UL subframes where DSs are included, but also in DL subframes where CRSs are included.

The mapping section 119 is controlled by the scheduler 118 to map various types of signals such as the PSS, the SSS, the PBCH, the CSI-RS, the CRS, the DS, the PDSCH and so on. The mapping of the DS employs CSI-RS and PRS mapping configurations, as has been described earlier with the first and second signal configurations (see FIG. 3). At this time, the mapping section 119 maps the DS in order to avoid the PSS and the SSS. By this means, the PSS, the SSS and the DS do not interfere with each other, so that small cell discovery makes no impact on the existing cell detection process.

Also, the mapping section 119 may map DSs to avoid resource where the PBCH and/or the CRS are present, or map the PDSCH and/or the CSI-RS to avoid DS resources. Also, when small cell S operates in TDD, the mapping section 119 maps DSs to UL subframes. By this means, the DSs do not interfere with other DL signals, so that small cell discovery makes no impact on the existing cell detection process. Also, when the downlink signal transmission process and the uplink signal receiving process can be carried out simultaneously in the transmitting/receiving section 103, the mapping section 119 may be configured not to map DSs to PDCCH and/or SRS resources in UL subframes.

A radio signal that is output from the mapping section 119 is subjected to an IFFT process in the IFFT section 121, attached cyclic prefixes in the CP attaching section 122, and transmitted to the user terminal 30 from the transmitting antenna.

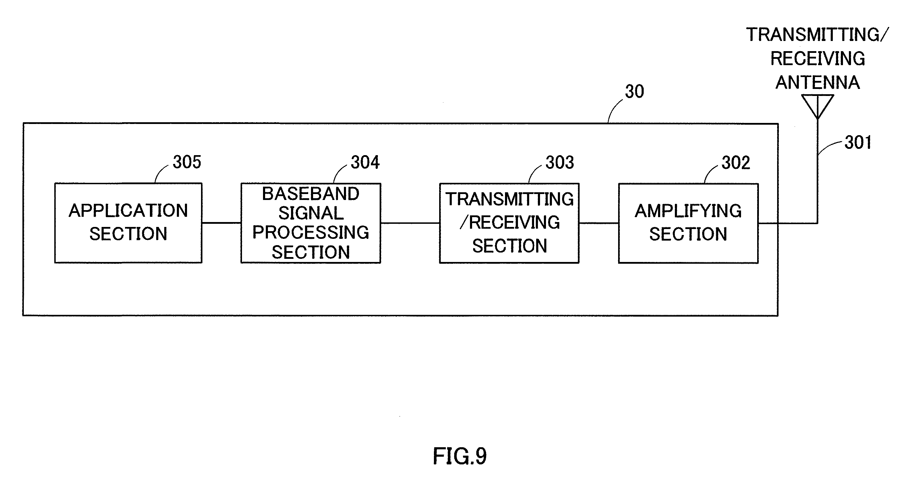

FIG. 9 is a diagram to show an overall structure of a user terminal 30 according to the present embodiment. The user terminal 30 has a transmitting/receiving antenna 301, an amplifying section 302, a transmitting/receiving section (receiving section) 303, a baseband signal processing section 304 and an application section 305.

As for a downlink data signal, a radio frequency signal that is received in the transmitting/receiving antenna 301 is amplified in the amplifying section 302, and subjected to frequency conversion and converted into the baseband signal in the transmitting/receiving section 303. This baseband signal is subjected to an FFT process, error correction decoding, a retransmission control receiving process and so on in the baseband signal processing section 304. This downlink data signal is forwarded to the application section 305. The application section 305 performs processes related to higher layers above the physical layer and the MAC layer.

Meanwhile, an uplink data signal is input from the application section 305 into the baseband signal processing section 304. The baseband signal processing section 304 performs a retransmission control (HARQ (Hybrid ARQ)) transmission process, channel coding, pre-coding, a DFT process, an IFFT process and so on, and the result is forwarded to transmitting/receiving section 303. The baseband signal that is output from the baseband signal processing section 304 is converted into a radio frequency band in the transmitting/receiving section 303. After that, the amplifying section 302 amplifies the radio frequency signal having been subjected to frequency conversion, and transmits the result from the transmitting/receiving antenna 301.

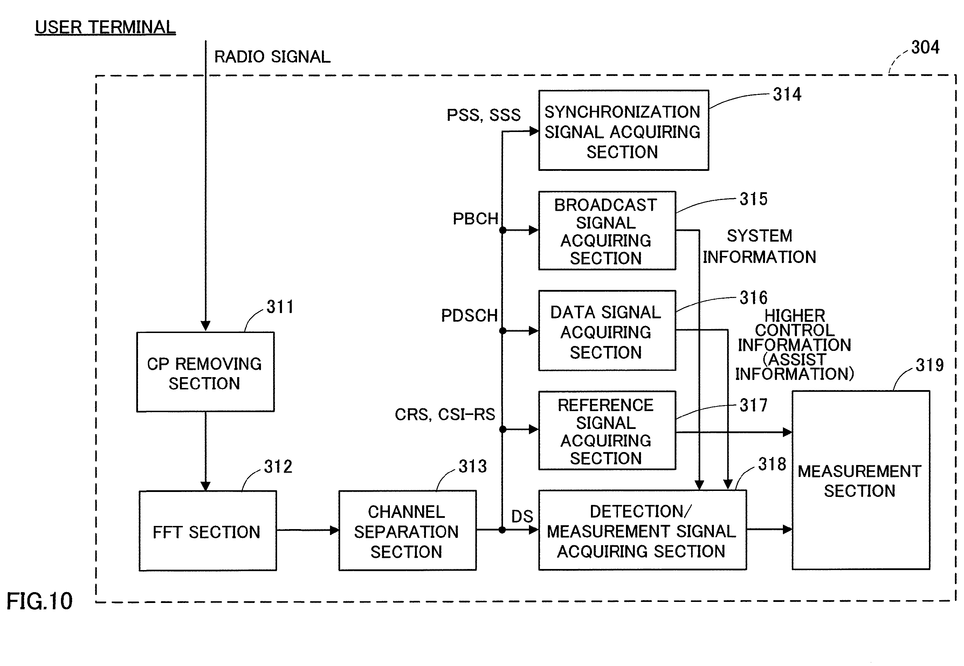

FIG. 10 is a diagram to show a principle functional structure of the baseband signal processing section 304 provided in the user terminal 30 according to the present embodiment. As shown in FIG. 10, the baseband signal processing section 304 has a CP removing section 311, an FFT section 312, a channel separation section 313, a synchronization signal acquiring section 314, a broadcast signal acquiring section 315, a data signal acquiring section 316, a reference signal acquiring section 317, a detection/measurement signal acquiring section (detection section) 318 and a measurement section 319. Although only part of the structure of the baseband signal processing section 304 is shown here, assume that a structure to meet the needs, without shortage, is provided. A radio signal that is received in the receiving antenna has the cyclic prefixes removed in the CP removing section 311, and subjected to an FFT process in the FFT section 312.

The channel separation section 313 separates radio signals input from the FFT section 312 into individual signals. Synchronization signals such as the PSS and the SSS are output to the synchronization signal acquiring section 314, broadcast signals such as the PBCH are output to the broadcast signal acquiring section 315, data signals such as the PDSCH are output to the data signal acquiring section 316, reference signals such as the CRS and the CSI-RS are output to the reference signal acquiring section 317, and detection/measurement signals such as the DS are output to the detection/measurement signal acquiring section 318.

The synchronization signal acquiring section 314 acquires the PSS and the SSS and establishes synchronization with the small cell, and, furthermore, identifies the small cell's physical cell ID. In this case, the DS is mapped to avoid the resources where the PSS and the SSS are present, so that the DS does not prevent the acquisition of the PSS and the SSS. Consequently, the user terminal 30 can execute the existing cell detection process using the PSS and the SSS.

The broadcast signal acquiring section 315 acquires the PBCH and acquires the MIB and the SIB included in the PBCH. If the DS is mapped such that it avoids the resources where the PBCH is present, the DS does not prevent the acquisition of the PBCH. By acquiring the PBCH, the user terminal 30 in idle mode can transition to RRC-connected mode. Consequently, the user terminal 30 in idle mode can detect the small cell S on a stand-alone basis. Also, the user terminal 30 can identify the TDD subframe configuration from the SIB.

The data signal acquiring section 316 acquires, demodulates and decodes the PDSCH and higher layer information. When the PDSCH is mapped to avoid DS resources, the user terminal 30 can improve the throughput of the demodulation process and the accuracy of demodulation by demodulating the PDSCH by avoiding the DS resources. The higher layer information includes assist information for receiving the DS. Also, when the small cell S operates in TDD, the higher layer information includes an indication that the DS is transmitted in UL subframes, and the subframe numbers in which the DS is transmitted, etc.

The reference signal acquiring section 317 acquires various types of reference signals such as the CRS and the CSI-RS. The CRS is used in the existing cell detection process, in addition to the demodulation of transmission data. The CSI-RS is used in channel quality measurement.

The detection/measurement signal acquiring section 318 acquires the DS based on the assist information input from the data signal acquiring section 316. In this case, the detection/measurement signal acquiring section 318 may understand that DSs are not transmitted in subframes where the PBCH and the paging signal are present. Also, when the small cell S operates in TDD, the detection/measurement signal acquiring section 318 acquires the DS in a UL subframe on the basis of the higher layer information. In this case, the detection/measurement signal acquiring section 318 does not identify the acquisition of the DS on the uplink as misconfiguration. The detection may be made on the assumption that at least one non-DS DL signal such as the CSI-RS, the CRS, the PDCCH, the PDSCH and so on is transmitted in this UL subframe. Also, DSs that are transmitted in UL subframes make no impact on existing DL signals transmitted in DL subframes.

The measurement section 319 measures the CRS and the DS input from the reference signal acquiring section 317 and the detection/measurement signal acquiring section 318. The measurement section 319 measures the CRS in the existing detection process, and measures the DS in small cell discovery. That is, existing user terminals 30 measure the CRS, while user terminals 30 to support small cell discovery may measure either the CRS or the DS.

As described above, in the radio communication system 1 according to the present embodiment, it is possible to allow a user terminal 30 to detect small cells in the existing detection process using synchronization signals, and, furthermore, detect small cells in a new detection process using DSs. At this time, DSs are mapped to avoid synchronization signals, so that the existing detection process to use synchronization signals and the new detection process to use the detection/measurement signals do not interfere with each other. Consequently, the new detection process can be introduced without making a negative impact on systems that employ the existing detection process.

The present invention is by no means limited to the above embodiment and can be implemented in various modifications. For example, it is possible to adequately change the number of carriers, the bandwidth of carriers, the signaling method, the number of processing sections, the order of processes and so on in the above description, without departing from the scope of the present invention, and implement the present invention. Besides, the present invention can be implemented with various changes, without departing from the scope of the present invention.

The disclosure of Japanese Patent Application No. 2013-200564, filed on September 26, 2013, including the specification, drawings and abstract is incorporated herein by reference in its entirety.

## Claims

1. A small base station that covers a small cell, the small cell being placed within a macro cell covered by a macro base station, the small base station comprising:
a signal generating section that generates a detection/measurement signal for a second detection process, which is different from a first detection process of the small cell using a synchronization signal;
a mapping section that maps the detection/measurement signal to avoid the synchronization signal; and
a transmission section that transmits the detection/measurement signal to a user terminal within the small cell.

2. The small base station according to claim 1, wherein the mapping section maps the detection/measurement signal in accordance with a mapping configuration of a PRS (Positioning Reference Signal) or a CSI-RS (Channel State Information-Reference Signal).

3. The small base station according to claim 1 or claim 2, wherein the mapping section maps the detection/measurement signal to avoid a measurement signal that is used to measure the small cell in the first detection process.

4. The small base station according to claim 1, wherein the mapping section maps a data signal and/or a CSI-RS to avoid the detection/measurement signal.

5. The small base station according to claim 1, wherein:
a user terminal in RRC-connected mode and a user terminal in idle mode before entering RRC-connected mode are present in the small cell;
the transmission section transmits a detection/measurement signal for RRC-connected mode; and
the mapping section maps the detection/measurement signal to avoid a broadcast signal for the user terminal in idle mode.

6. The small base station according to claim 1, wherein:
the small cell operates in time division duplex; and
the transmission section reports assist information for receiving the detection/measurement signal in an uplink subframe, and, furthermore, transmits the detection/measurement signal in an uplink subframe.

7. A user terminal in a small cell, the small cell being covered by a small base station and placed within a macro cell covered by a macro base station, the user terminal comprising:
a receiving section that receives, from the small base station, a detection/measurement signal for a second detection process, which is different from a first detection process of the small cell using a synchronization signal, the detection/measurement signal being mapped in the small base station to avoid the synchronization signal; and
a detection section that detects the small cell by using the detection/measurement signal.

8. The user terminal according to claim 7, wherein:
the user terminal is present in the small cell in idle mode before entering RRC-connected mode;
the detection/measurement signal is transmitted from the small base station to the user terminal in RRC-connected mode; and
the receiving section understands that the detection/measurement signal is not transmitted in a subframe in which a broadcast signal and/or a paging signal for the user terminal in idle mode is transmitted.

9. The user terminal according to claim 7, wherein:
the small cell operates in time division duplex;
the receiving section receives assist information for receiving the detection/measurement signal in an uplink subframe, and, furthermore, receives the detection/measurement signal in an uplink subframe.

10. A radio communication method, in which a small cell covered by a small base station is placed within a macro cell covered by a macro base station and a user terminal is present within the small cell, the radio communication method comprising the steps in which:
the small base station generates a detection/measurement signal for a second detection process, which is different from a first detection process of the small cell using a synchronization signal;
the small base station maps the detection/measurement signal to avoid the synchronization signal and transmits the detection/measurement signal to the user terminal;
the user terminal receives the detection/measurement signal from the small base station; and
the user terminal detects the small cell by using the detection/measurement signal.
